# EUROPEAN PATENT APPLICATION

(11) **EP 4 723 445 A1**
(43) Date of publication of application: **08.04.2026**
(21) Application number: 24831327.2
(22) Date of filing: 29.02.2024
(51) Int. Cl.: H02K 15/095

(54) **WIRE WINDING METHOD AND WIRE WINDING MACHINE**

(30) Priority: 28.06.2023 JP 2023106462
(71) Applicant: Odawara Engineering Co., Ltd., Ashigarakami-gun, Kanagawa 258-0003 (JP)
(72) Inventor: MIYAWAKI, Noburo, Ashigarakami-gun, Kanagawa 258-0003 (JP); SAITO, Daiki, Ashigarakami-gun, Kanagawa 258-0003 (JP); OSARI, Shunji, Ashigarakami-gun, Kanagawa 258-0003 (JP); HASEGAWA, Shinya, Ashigarakami-gun, Kanagawa 258-0003 (JP)
(74) Representative: Prüfer & Partner mbB Patentanwälte · Rechtsanwälte
(86) International application number: PCT/JP2024/007561
(87) International publication number: WO 2025/004449

(57) **Abstract**

To perform winding onto an armature in which a plurality of magnetic poles face radially outward at high speed and with high accuracy without requiring complex control or compensatory operations of a nozzle, the nozzle (14) is supported such that the nozzle (14) has an inclination angle (*θ*1) relative to a rotation shaft (6), substantially equal to half of an angle formed between adjacent magnetic poles (4a) of a rotor (4) as a winding target. A wire (W) is wound on a first portion of a magnetic pole (4a) by linearly moving the rotation shaft (6) together with the nozzle (14) in a first direction parallel to a central axis of the rotor (4). Thereafter, the nozzle (14) is rotated about the rotation shaft (6) in a second direction by approximately 180 degrees, whereby the wire (W) is wound on a second portion of the magnetic pole (4a). Thereafter, the rotation shaft (6) is linearly moved together with the nozzle (14) in a direction opposite to the first direction, whereby the wire (W) is wound on a third portion of the magnetic pole (4a). Thereafter, the nozzle (14) is rotated about the rotation shaft (6) in the second direction by approximately 180 degrees, whereby the wire (W) is wound on a fourth portion of the magnetic pole (4a), thus completing one turn of winding around the magnetic pole (4a).

## Description

### [Technical Field]

The present invention relates to a winding method and a winding apparatus for winding onto an armature in which a plurality of magnetic poles are radially arranged and face outward in a radial direction of the armature.

### [Background Art]

In a winding method for magnetic poles of an armature in which a plurality of magnetic poles are radially arranged and face outward in a radial direction of the armature, there is known a method in which, for example, after a rotor of an inner-rotor type motor is rotated by an angle formed between adjacent magnetic poles, a nozzle is linearly moved in one direction along a rotational axis direction of the rotor, and after the nozzle reaches an opposite side of the magnetic pole, the rotor is rotated in an opposite direction by the same angle, and thereafter the nozzle is linearly moved in a direction opposite to the above direction along the rotational axis direction, whereby the nozzle is substantially caused to travel once around the magnetic pole. That is, winding around both axial end portions of the magnetic pole in the rotational axis direction of the rotor is performed by rotating the rotor. It is also known to perform alignment winding in which multiple turns of winding are made such that the wire is aligned on the magnetic pole by repetitively performing the above operation with the nozzle being displaced (moved forward and backward) in the axial direction of the magnetic pole.

An example of a winding apparatus that performs such winding is disclosed in PTL 1.

### [Citation List]

### [Patent Literature]

[PTL 1] Japanese Patent Application Laid-Open Publication No. Hei 5 (1993)-122909
[PTL 2] Japanese Patent Application Laid-Open Publication No. 2002-119025
[PTL 3] Japanese Patent Application Laid-Open Publication No. 2004-328844

### [Summary of Invention]

### [Technical Problem]

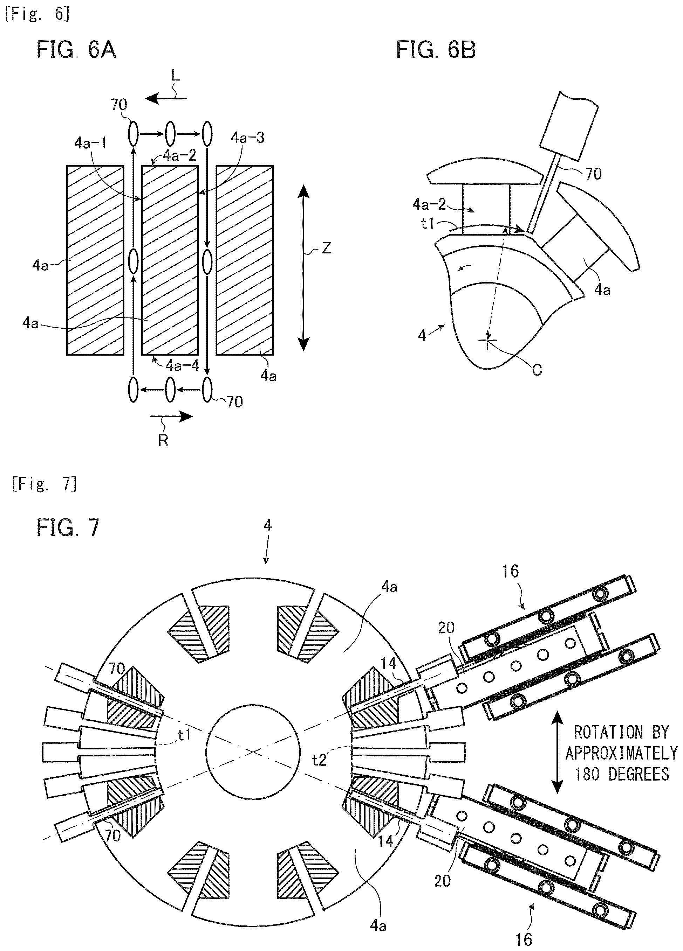

However, in the above method in which the rotor is rotated at both end portions of the magnetic pole to perform winding, the tip of the nozzle traces an arc-shaped trajectory relative to the magnetic pole (see Fig. 6B), resulting in a problem that alignment accuracy of the wire deteriorates. In order to solve this problem, it may be considered to implement a countermeasure in which, during rotation of the rotor, the nozzle or the rotor is displaced in the axial direction of the magnetic pole by an amount that cancels the arc-shaped positional displacement, thereby converting the arc-shaped trajectory of the nozzle into a linear trajectory. However, this approach involves complicated compensatory operations, and thus another problem remains in that the winding speed is reduced.

The present invention has been made in view of the above circumstances, and an object of the invention is to enable high-speed and high-accuracy winding onto an armature in which a plurality of magnetic poles are radially arranged and face outward in a radial direction of the armature, without requiring complicated control or compensatory operations of the nozzle.

### [Solution to Problem]

In order to achieve the above object, a winding method according to the present invention is a winding method for an armature in which a plurality of magnetic poles are radially arranged and face outward in a radial direction of the armature, an outer circumferential surface of an axis of each magnetic pole including a pair of a first portion and a third portion extending in parallel with a central axis direction of the armature, and a second portion and a fourth portion respectively located between distal ends of the first portion and the third portion, the method comprising: preparing a nozzle configured to feed a wire, the nozzle being supported relative to a rotation shaft perpendicular to the central axis of the armature and extending along the radial direction such that the nozzle has an inclination angle, relative to the rotation shaft, that is a first angle equal to half of an angle formed between adjacent magnetic poles among the plurality of magnetic poles; and while feeding the wire from the nozzle, performing one turn of winding around the magnetic pole by: linearly moving the rotation shaft together with the nozzle in a first direction parallel to the central axis; after the nozzle reaches in the vicinity of a second-portion-side distal end of the first portion, rotating the nozzle about the rotation shaft in a second direction by approximately 180 degrees; thereafter linearly moving the rotation shaft together with the nozzle in a direction opposite to the first direction; and after the nozzle reaches in the vicinity of a fourth-portion-side distal end of the third portion, rotating the nozzle about the rotation shaft in the second direction by approximately 180 degrees.

In such a winding method, the one turn of winding around the magnetic pole may include: winding the wire onto the first portion of the magnetic pole by linearly moving the rotation shaft together with the nozzle in the first direction; after the nozzle reaches in the vicinity of the second-portion-side distal end of the first portion, winding the wire onto the second portion of the magnetic pole by rotating the nozzle about the rotation shaft in the second direction by approximately 180 degrees; thereafter winding the wire onto the third portion of the magnetic pole by linearly moving the rotation shaft together with the nozzle in the direction opposite to the first direction; and after the nozzle reaches in the vicinity of the fourth-portion-side distal end of the third portion, winding the wire onto the fourth portion of the magnetic pole by rotating the nozzle about the rotation shaft in the second direction by approximately 180 degrees.

Alternatively, the nozzle may be supported by a nozzle support unit that is supported on the rotation shaft, such that the nozzle is slidable along a conveyance path having an inclination angle of the first angle relative to the rotation shaft, and the method may include, while sliding the nozzle by a predetermined distance along the conveyance path during the one turn of winding around the magnetic pole, performing a plurality of turns of winding around the magnetic pole, thereby performing aligned winding of the wire on the magnetic pole.

Further, in each wiring method described above, when rotating the nozzle about the rotation shaft in the second direction, the nozzle may be rotated in the same direction as a rotation of the rotation shaft and by the same angle as the rotation of the rotation shaft.

A winding apparatus according to the present invention is a winding apparatus configured to perform winding on an armature in which a plurality of magnetic poles are radially arranged and face outward in a radial direction of the armature, the winding apparatus comprising: a rotation shaft configured to be disposed perpendicular to a central axis of the armature as a winding target and along the radial direction; a first driving unit configured to rotate the rotation shaft about its axis; a second driving unit configured to move the rotation shaft in a direction parallel to the central axis of the armature; a nozzle configured to feed a wire; a nozzle support unit configured to support the nozzle such that the nozzle has an inclination angle, relative to the rotation shaft, that is a first angle equal to half of an angle formed between adjacent magnetic poles among the plurality of magnetic poles of the armature; and a controller configured to control the first driving unit and the second driving unit such that, with respect to the armature in which an outer circumferential surface of an axis of each magnetic pole includes a pair of a first portion and a third portion extending in parallel with a central axis direction of the armature, and a second portion and a fourth portion respectively located between distal ends of the first portion and the third portion, while feeding the wire from the nozzle, the rotation shaft is linearly moved together with the nozzle supported by the nozzle support unit in a first direction parallel to the central axis; after the nozzle reaches in the vicinity of a second-portion-side distal end of the first portion, the nozzle is rotated about the rotation shaft in a second direction by approximately 180 degrees; thereafter the rotation shaft is linearly moved together with the nozzle in a direction opposite to the first direction; and after the nozzle reaches in the vicinity of a fourth-portion-side distal end of the third portion, the nozzle is rotated about the rotation shaft in the second direction by approximately 180 degrees, thereby performing one turn of winding around the magnetic pole.

In such a winding apparatus, the controller may be configured to control the first driving unit and the second driving unit such that the wire is wound onto the first portion of the magnetic pole by linearly moving the rotation shaft together with the nozzle in the first direction; after the nozzle reaches in the vicinity of the second-portion-side distal end of the first portion, the wire is wound onto the second portion of the magnetic pole by rotating the nozzle about the rotation shaft in the second direction by approximately 180 degrees; thereafter the wire is wound onto the third portion of the magnetic pole by linearly moving the rotation shaft together with the nozzle in the direction opposite to the first direction; and after the nozzle reaches in the vicinity of the fourth-portion-side distal end of the third portion, the wire is wound onto the fourth portion of the magnetic pole by rotating the nozzle about the rotation shaft in the second direction by approximately 180 degrees, thereby performing the one turn of winding around the magnetic pole.

Alternatively, the nozzle support unit may comprise a conveyance path configured to support the nozzle such that the nozzle is slidable with an inclination angle of the first angle relative to the rotation shaft, the apparatus may further comprise a third driving unit configured to slide the nozzle supported within the conveyance path, and the controller may be configured to control the third driving unit such that, during the one turn of winding around the magnetic pole, the nozzle is slid by a predetermined distance along the conveyance path.

Further, in each winding apparatus described above, the first driving unit may comprise: a first pulley operatively coupled to the rotation shaft; a motor; a second pulley operatively coupled to the motor; a belt looped around between the first pulley and the second pulley; a link that supports the first pulley rotatably relative to the second pulley; and a coupling provided between the second pulley and a rotation shaft of the motor, the coupling being configured to transmit rotation of the motor to the second pulley while allowing a positional displacement of the second pulley in a direction orthogonal to a movement direction of the rotation shaft by the second driving unit.

Further, the first pulley and the second pulley may have the same number of teeth, the belt may be a timing belt, and the coupling may be an Oldham coupling.

Further, in each winding apparatus described above, the rotation shaft may comprise: an outer cylinder configured to be rotated by the first driving unit; and an inner shaft located inside the outer cylinder and configured to be rotated together with the outer cylinder, and the nozzle support unit may comprise: a base member fixed to the outer cylinder and having the conveyance path; and a nozzle support body provided to be slidable along the conveyance path and configured to support the nozzle, and the nozzle support body may have an arm extending in a direction orthogonal to a direction of the slide movement, the arm being engaged, via a cam follower, with an annular groove formed at a distal end portion of the inner shaft on the armature side, such that movement of the inner shaft in its axial direction causes the nozzle support body to slide, and the third driving unit may be configured to slide the nozzle via the nozzle support body by moving the inner shaft in its axial direction.

Further, the winding apparatus may further comprise a rail member extending along the central axis direction of the armature as the winding target, and a rear end portion of the inner shaft on a side opposite to the armature may be supported by the rail member, and the third driving unit may be configured to move the inner shaft in its axial direction by sliding the rail member in the axial direction of the inner shaft.

Furthermore, a cross section of the nozzle, taken perpendicular to a longitudinal direction of the nozzle, may have a shape having a major axis and a minor axis with a wire feed port located substantially at a center thereof, and a curved guide surface may be formed on a surface of a longitudinal end portion of the nozzle, the curved guide surface having a larger radius of curvature on a major-axis side than on a minor-axis side.

Further, in each of the winding apparatus described above, during the one turn of winding around the magnetic pole, the nozzle may be rotated together with the rotation shaft in the same rotational direction and by the same rotational angle as a rotation of the rotation shaft.

The present invention is not limited to the methods and apparatuses described above, and may be implemented in any form, such as a system including a plurality of devices, a computer program for controlling a winding apparatus, a recording medium storing such a computer program, an armature wound using the winding method or the winding apparatus, or an electrical rotating machine including such an armature.

### [Effect of the Invention]

According to the present invention, high-speed and high-accuracy winding onto an armature in which a plurality of magnetic poles are radially arranged and face outward in a radial direction of the armature can be performed without requiring complicated control or compensatory operations of the nozzle.

### [Brief Description of Drawings]

[Fig. 1] Fig. 1 is a plan view of main portions of a winding apparatus according to an embodiment of the present invention.
[Fig. 2] Fig. 2 is a side view of main portions of the winding apparatus shown in Fig. 1, illustrating a state in which a nozzle support unit 16 is rotated by approximately 90 degrees from the state of Fig. 1 and is positioned on an upper side in the drawing.
[Fig. 3] Fig. 3A and Fig. 3B are schematic views illustrating a configuration of a rotational drive mechanism of the winding apparatus shown in Fig. 1. Fig. 3A is a view seen from above in Fig. 1, and Fig. 3B is a view seen from above in Fig. 3A showing components appearing in Fig. 3A.
[Fig. 4] Fig. 4 is a diagram for explaining an operation of a control unit of the winding apparatus shown in Fig. 1.
[Fig. 5] Fig. 5A and Fig. 5B are diagrams for explaining a winding operation performed by the winding apparatus shown in Fig. 1. Fig. 5A illustrates movement of a nozzle relative to a section of a magnetic pole parallel to a rotational axis of a rotor. Fig. 5B is a perspective view illustrating rotational movement of the nozzle when winding an end portion of the magnetic pole.
[Fig. 6] Fig. 6A and Fig. 6B are diagrams for explaining a winding operation of a comparative example. Fig. 6A corresponds to Fig. 5A. Fig. 6B is a plan view of main portions of a rotor and a nozzle for explaining that a trajectory of the nozzle is arc-shaped.
[Fig. 7] Fig. 7 is a plan view illustrating a difference in nozzle trajectories between a winding operation according to the present invention and that according to the comparative example.
[Fig. 8] Fig. 8 is a side view of main portions illustrating a positional relationship between a rotor and a nozzle in a winding apparatus according to the comparative example.
[Fig. 9] Fig. 9A and Fig. 9B are diagrams illustrating a difference in trajectories depending on a nozzle angle relative to the rotor. Fig. 9A illustrates trajectories in the comparative example, and Fig. 9B illustrates trajectories in the winding apparatus of Fig. 1.

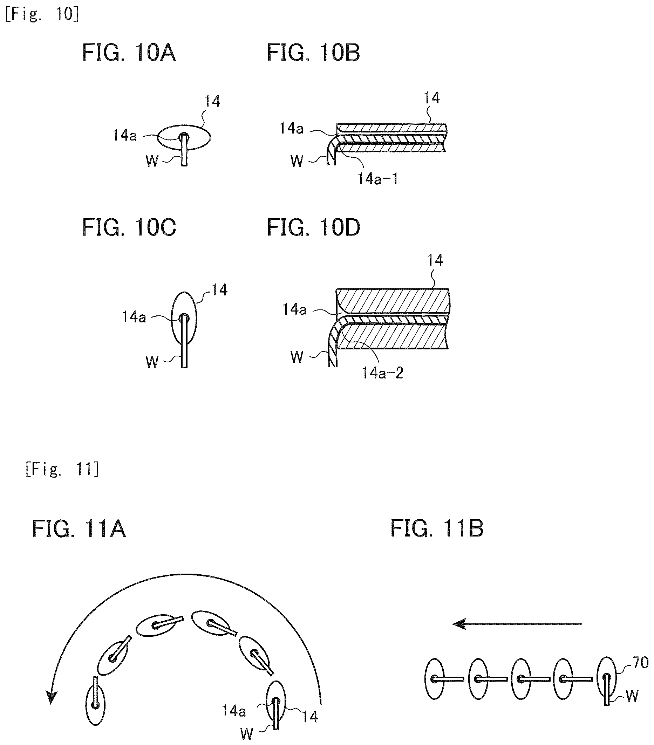

[Fig. 10] Fig. 10A to Fig. 10D are diagrams illustrating wire feeding states at a distal end of the nozzle having an elliptical cross-section. Fig. 10A and Fig. 10B illustrate a state in which the wire is fed from a curved guide surface having a smaller radius of curvature. Fig. 10A is an end view of the nozzle seen from the wire feeding port side, and Fig. 10B is a sectional view of the nozzle near its distal end taken along a plane parallel to a wire feed path and including the minor axis. Fig. 10C and Fig. 10D illustrate a state in which the wire is fed from a curved guide surface having a larger radius of curvature. Fig. 10C is an end view corresponding to Fig. 10A, and Fig. 10D is a sectional view of the nozzle near its distal end taken along a plane parallel to the wire feed path and including the major axis.
[Fig. 11] Fig. 11A and Fig. 11B are diagrams for explaining a difference in wire feeding states from the nozzle, between the winding apparatus shown in Fig. 1 and the comparative example. Fig. 11A illustrates the feeding state in the winding apparatus shown in Fig. 1, and Fig. 11B illustrates the feeding state in the comparative example.
[Fig. 12] Fig. 12 is a flowchart illustrating an example of processing performed by a control unit 50 to execute a winding method according to the present embodiment.

### [Description of Embodiments]

Hereinafter an embodiment of the present invention will be described with reference to the drawings.

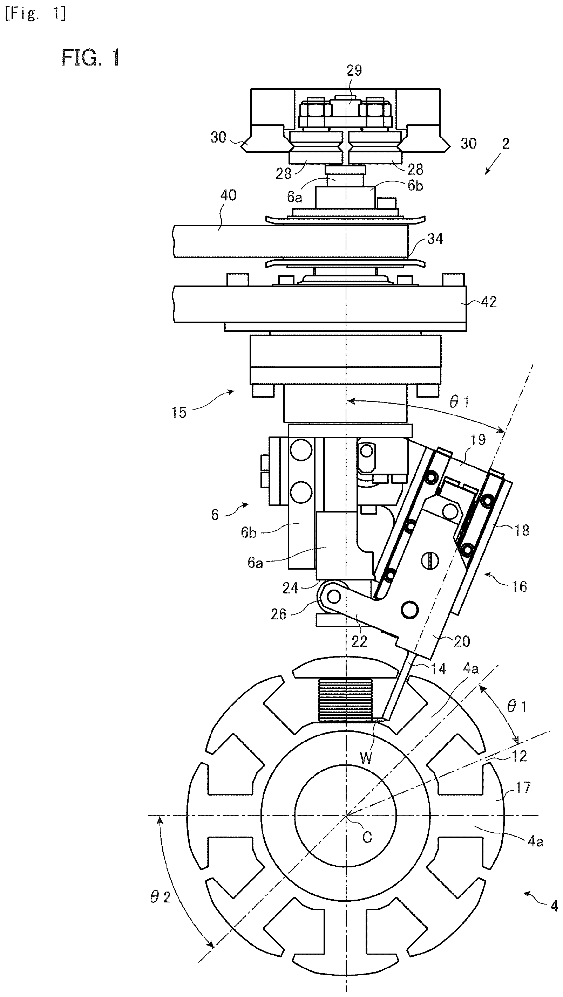

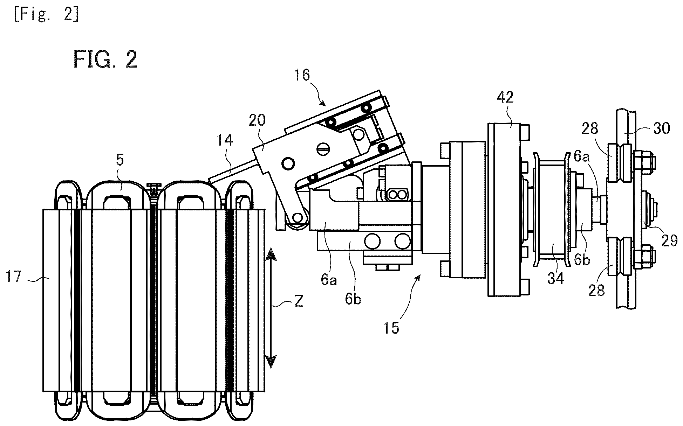

Fig. 1 is a plan view showing main portions of a winding apparatus 2 according to an embodiment of the present invention, and Fig. 2 is a side view of the main portions. In Fig. 2, a nozzle support unit 16 is shown in a state rotated by approximately 90 degrees from the state of Fig. 1, so that it is located on an upper side in the figure.

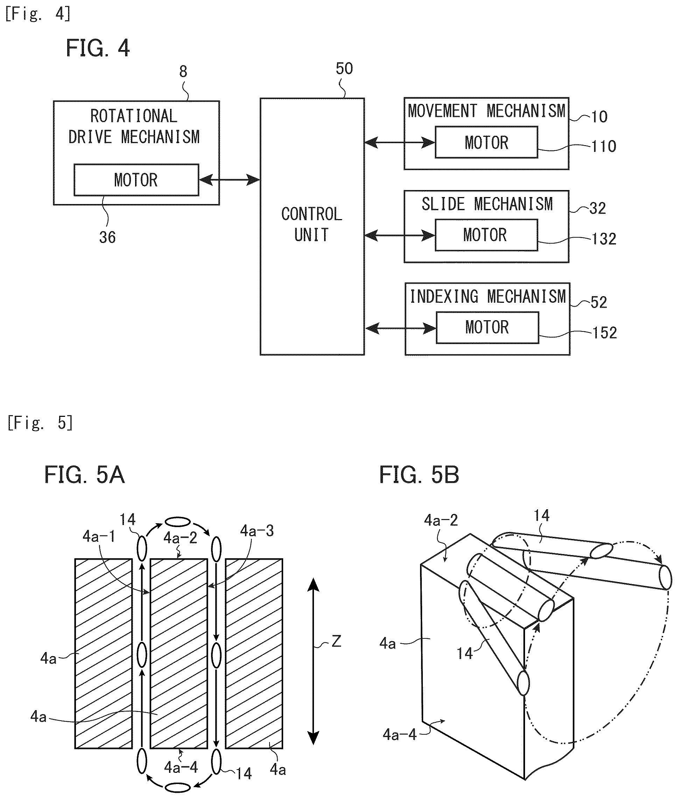

The winding apparatus 2 is configured to perform winding on a rotor 4 of an inner-rotor type motor, which is an example of an armature in which a plurality of magnetic poles (salient poles) 4a are radially arranged and face outward in a radial direction of the armature. The winding apparatus 2 includes: a rotation shaft 6; a rotary drive mechanism 8 (see Fig. 4) as a first driving unit configured to rotate the rotation shaft 6; and a movement mechanism 10 (see Fig. 4) as a second driving unit configured to move the rotation shaft 6 in a central-axis (rotation-center) direction of the rotor 4, i.e., in a direction indicated by arrow Z in Fig. 2 (hereinafter also referred to as an vertical direction).

The winding apparatus 2 further includes a nozzle 14 configured to feed a wire W. The nozzle 14 is supported relative to the rotation shaft 6 such that the nozzle 14 has an inclination angle *θ*1 relative to a central axis of the rotation shaft 6, *θ*1 (first angle) being substantially equal to half of *θ*2, which is an angle formed between adjacent magnetic poles 4a. *θ*1 corresponds to an angle formed between a central axis of a magnetic pole 4a (an axis along the radial direction of the rotor 4) and a direction in which a slot opening 12, which is an opening formed between adjacent magnetic poles 4a, faces. The wire W is a conductor wire for forming a coil by winding it around the rotor 4.

The wire W is supplied to the nozzle 14 from a wire bobbin through a tension device. The rotation shaft 6, the nozzle 14, and other components form a rotation-shaft unit 15. The rotation-shaft unit 15 is vertically moved by the movement mechanism 10, whereby the rotation shaft 6 is moved in the arrow-Z direction. In Fig. 1, reference sign C denotes the central axis of the rotor 4.

In Fig. 2, reference sign 17 indicates a portion of each magnetic pole 4a that extends in a circumferential direction of the rotor 4 at a radially outer distal end portion of the rotor 4. Reference sign 5 denotes an insulator (insulating end plate) provided for electrically insulating between the distal end indicated by reference sign 17 of each magnetic pole 4a and the wound wire W. In Fig. 2, only portions of the insulator 5 that protrude from the rotor 4 in the central-axis direction of the rotor 4 are visible. In Fig. 1, illustration of the insulator 5 is omitted.

The rotation shaft 6 has a dual structure including an inner shaft 6a located at the center and an outer cylinder 6b that houses the inner shaft 6a therein and is rotated by the rotary drive mechanism 8. A slide key is formed on an inner surface of a distal end portion (on the rotor 4 side) of the outer cylinder 6b, and the slide key engages with a key groove formed on an outer surface of the inner shaft 6a. Through this engagement, the outer cylinder 6b and the inner shaft 6a are coupled such that the inner shaft 6a rotates together with the outer cylinder 6b about its axis and is slidable relative to the outer cylinder 6b in an axial direction. Alternatively, the key groove may be provided on the outer cylinder 6b side and the key may be provided on the inner shaft 6a side, or key grooves may be provided on both the outer cylinder 6b side and the inner shaft 6a side and a slide key may be inserted in the key grooves, to achieve the same coupling. The coupling may also be implemented using other publicly known means.

The inner shaft 6a has an axial length slightly greater than that of the outer cylinder 6b, and both axial ends of the inner shaft 6a project from the outer cylinder 6b. In addition, for each of the inner shaft 6a and the outer cylinder 6b, the cross-sectional size and shape taken along a plane perpendicular to the axial direction are different at different axial positions.

The outer cylinder 6b has a larger cross-sectional size in the vicinity of a portion at a front-end side where a nozzle support unit 16, described later, is provided than in the vicinity of a portion at a rear-end side where a first pulley 34, described later, is provided.

The inner shaft 6a is formed thicker in the vicinity of a portion at the front-end side where an annular groove 24 is provided than in the vicinity of a portion at the rear-end side where the inner shaft 6a is supported by a bearing 29, described later. A diameter of an inner peripheral surface of the outer cylinder 6b that receives the inner shaft 6a are also different at different axial positions correspondingly; however, at least the diameter of the inner peripheral surface of the outer cylinder 6b is formed with a margin such that the inner shaft 6a can perform axial movement required during winding. In this example, since the outer cylinder 6b is coupled with the inner shaft 6a at the front-end side and the inner shaft 6a is supported by the bearing 29 at the rear-end side, even if some portion of the inner shaft 6a is separated from the inner surface of the outer cylinder 6b, no problem arises.

At the front-end side (the rotor 4 side) of the outer cylinder 6b, a nozzle support unit 16 is provided such that the nozzle support unit 16 has an inclination angle *θ*1 substantially equal to the above-described angle *θ*1 relative to the rotation shaft 6. The nozzle 14 is slidable along a conveyance path 19 provided in the nozzle support unit 16. In this example, the sliding direction coincides with an axial direction (a longitudinal direction in which the wire is fed) of the nozzle 14.

The nozzle support unit 16 includes a base member 18 fixed to the outer cylinder 6b such that the base member 18 has an inclination angle *θ*1 substantially equal to the above-described angle *θ*1 relative to the rotation shaft 6, and a conveyance path 19 is formed in the base member 18 in a direction having the inclination angle *θ*1 relative to the rotation shaft 6. A nozzle support body 20 that supports the nozzle 14 is provided in the conveyance path 19. The nozzle support body 20 is slidable along the conveyance path 19, and the nozzle 14 slides together with the nozzle support body 20.

An arm 22 extending in a direction orthogonal to the sliding direction is integrally formed on the nozzle support body 20. The arm 22 is engaged, through a cam follower 26, with an annular groove 24 formed at the front-end portion on the rotor 4 side of the inner shaft 6a such that the arm 22 is movable within the annular groove 24. When the inner shaft 6a moves in its axial direction, the displacement is transmitted to the nozzle support body 20 via the cam follower 26 and the arm 22, thereby causing the nozzle support body 20 to slide. Accordingly, the nozzle 14 also slides.

In this case, a positional deviation of the arm 22 relative to the inner shaft 6a occurs; however, the positional deviation is absorbed as the cam follower 26 moves along the annular groove 24 in the circumferential direction of the rotor 4. Consequently, sliding displacement of the nozzle 14 is enabled while maintaining the inclination angle *θ*1.

When winding is performed on the magnetic pole 4a, since the rotation shaft 6 including the inner shaft 6a is generally positioned on the central axis of the magnetic pole 4a to be wound as shown in Fig. 1, the above-described sliding displacement allows a distal-end position of the nozzle 14 to be moved in the radial direction of the rotor 4 (in a direction differing by the inclination angle *θ*1 from the central axis of the magnetic pole 4a), so that a position at which the wire W is wound around each magnetic pole 4a can be shifted in the radial direction of the rotor 4.

A rear-end portion of the inner shaft 6a (on a side opposite to the rotor 4) is supported by the bearing 29 such that rotation about its central axis is allowed while sliding movement in its axial direction is prevented. As the bearing 29, it is preferable to use a bearing capable of receiving axial loads in both directions (for example, a self-aligning roller bearing). Rotary members 28 arranged in a 2×2 configuration so as to surround the bearing 29 are coupled to the bearing 29, and each rotary member 28 is engaged with a rail member 30 extending in the vertical direction (the arrow-Z direction in Fig. 2). The rotary members 28 can move, by rotating on the rail member 30, together with the bearing 29 and the rotation-shaft unit 15 supported thereby, in the vertical direction parallel to the central axis of the rotor 4 along the rail member 30.

The rail member 30 is provided such that the rail member 30 is movable in the axial direction of the inner shaft 6a by a slide mechanism 32 as a third driving unit (see Fig. 4). When the rail member 30 moves in the axial direction, the bearing 29 is moved in the axial direction following the movement of the rail member 30, and the inner shaft 6a is moved in the axial direction by being pushed or pulled by the bearing 29. As described above, the nozzle 14 moves in its axial direction following in accordance with the movement of the inner shaft 6a.

By sliding the nozzle 14 by an amount corresponding to a width of the wire W during one turn of winding around the magnetic pole 4a, a position at which the wire W is wound around the magnetic pole 4a can be shifted by the width of the wire W every turn, thereby enabling alignment winding in which the wires W of respective turns are densely arranged. On the other hand, even if the inner shaft 6a moves in its axial direction, the outer cylinder 6b does not move.

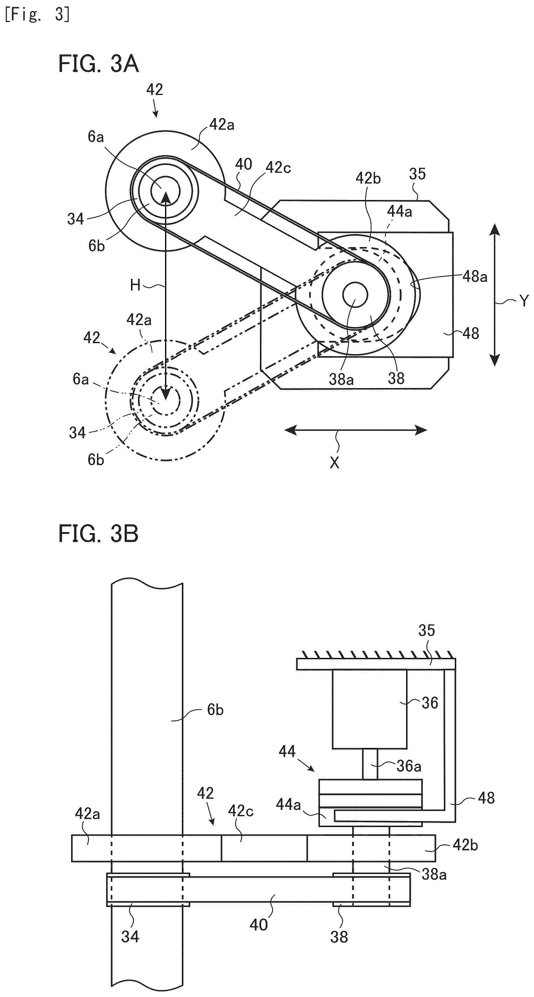

Next, Fig. 3A and Fig. 3B schematically illustrate a configuration of the rotational drive mechanism 8. Fig. 3A is a view as seen from an upper side (the rail member 30 side) of Fig. 1, and Fig. 3B is a view as seen from an upper side of Fig. 3A showing components appearing in Fig. 3A.

As shown in Fig. 1, Fig. 3A, and Fig. 3B, the rotational drive mechanism 8 includes a first pulley 34 operatively coupled to the rotation shaft 6 (to the outer cylinder 6b), and a motor 36 as a drive source configured to rotate the outer cylinder 6b, the motor 36 being fixed to a frame 35 which is separate from the rotation-shaft unit 15 and does not appear in Fig. 1. The rotational drive mechanism 8 further includes a second pulley 38 having the same number of teeth as the first pulley 34, the second pulley 38 being operatively coupled to a rotation shaft 36a of the motor 36 via a coupling 44, and a timing belt 40 looped around between the first pulley 34 and the second pulley 38. A link 42 is also provided between the outer cylinder 6b, which serves as a rotation shaft of the first pulley 34, and a rotation shaft 38a of the second pulley 38.

The link 42 includes a first support portion 42a that is rotatably coupled to the outer cylinder 6b via a bearing or the like, a second support portion 42b that is rotatably coupled to the rotation shaft 38a via a bearing or the like, and an arm portion 42c that connects the first support portion 42a and the second support portion 42b. By means of the link 42, the outer cylinder 6b is supported such that the outer cylinder 6b is rotatable about the rotation shaft 38a. Since the outer cylinder 6b is parallel to the rotation shaft 38a, this substantially means that the first pulley 34 is supported, via the outer cylinder 6b and by the link 42, such that the first pulley 34 is rotatable relative to the center of the second pulley 38.

The coupling 44 is an Oldham coupling that transmits the rotation of the motor 36 to the second pulley 38 while allowing positional displacement (eccentricity) of the second pulley 38 and the rotation shaft 38a in a direction orthogonal to the moving direction of the rotation shaft 6 (outer cylinder 6b) along the rail member 30 in the direction indicated by arrow Z in Fig. 2, i.e., in a direction indicated by arrow X in Fig. 3A. Therefore, the second pulley 38 is permitted to move to some extent in a direction perpendicular to the rotation shaft 36a (and the rotation shaft 38a).

A bracket 48 having a guide recess 48a is fixed to the frame 35. The guide recess 48a has a width substantially equal to the outer diameter of an end member 44a on the rotation shaft 38a side of the coupling 44, accommodates the end member 44a, and restricts movement of the end member 44a such that the end member 44a is permitted to move in the direction indicated by arrow X and is prevented from moving in a direction indicated by arrow Y that is parallel to a movement trajectory H.

Here, movement of the rotation shaft 6 along the rail member 30 becomes movement along the movement trajectory H in Fig. 3A, and this movement is linear. In contrast, due to the link 42, the first pulley 34 performs a rotational movement relative to the second pulley 38.

Accordingly, when the rotation shaft 6 moves along the movement trajectory H from the position shown by the solid line to the position shown by the phantom line in Fig. 3A, that is, downward in the drawing, the second pulley 38 is pushed to the right in the drawing by the link 42 during the course of this movement, and after the rotation shaft 6 passes the intermediate point, the second pulley 38 is pulled back in the opposite direction and returns to the original position. During this movement, a downward force in Fig. 3A is also applied to the second pulley 38; however, downward movement does not occur because movement of the end member 44a is restricted by the guide recess 48a of the bracket 48.

Accordingly, the second pulley 38 moves only in the direction indicated by arrow X together with the rotation shaft 38a. When the rotation shaft 6 moves upward in Fig. 3A, the second pulley 38 similarly moves only in the direction indicated by arrow X.

Even if eccentricity occurs due to this movement, the coupling 44 is capable of transmitting rotation of the motor 36 to the second pulley 38, and further to the first pulley 34 and the rotation shaft 6 via the timing belt 40. Thus, by virtue of these mechanisms, the rotation shaft 6 can be stably rotationally driven by the motor 36 even when the rotation shaft 6 moves in the direction indicated by arrow Z. Although the first pulley 34 is fixed to the outer cylinder 6b, the inner shaft 6a also rotates together with the outer cylinder 6b.

Furthermore, since movement of the end member 44a in the direction indicated by arrow Y is restricted, even if the rotation shaft 6 rotates relative to the rotation shaft 38a, it is possible to suppress an amount of positional displacement between the rotation shaft 38a and the rotation shaft 36a, and power of the motor 36 can be efficiently transmitted to the rotation shaft 6. From this viewpoint, it is preferable that the positions of the rotation shaft 36a and the rotation shaft 38a in the direction indicated by arrow Y are aligned with each other. In addition, when viewed in the direction indicated by arrow Y, it is preferable that the rotation shaft 36a and the rotation shaft 38a are located at the center of the rotation range of the rotation shaft 6 via the link 42, because the load caused by the rotation can thereby be evenly distributed.

Further, if the numbers of teeth of the first pulley 34 and the second pulley 38 differ from each other, when the first pulley 34 moves along the movement trajectory H, a phase deviation occurs between the timing belt 40 and the respective pulleys by an amount corresponding to the difference in the number of teeth, and the first pulley 34 would rotate together with the nozzle 14 even without rotating the second pulley 38, which is undesirable. On the other hand, if the numbers of teeth are the same, the number of teeth that disengage from one pulley due to the movement of the first pulley 34 is offset by an equal number of teeth that engage with the other pulley, and therefore such a problem can be eliminated.

Fig. 4 is a view for explaining operations of a control unit 50 of the winding apparatus 2.

The winding apparatus 2 includes the control unit 50, which is a microcomputer including a CPU, ROM, RAM, and an I/O interface, and the like, and controls the rotational drive mechanism 8, the movement mechanism 10, and the slide mechanism 32 described above, and an indexing mechanism 52 described later. Not only the rotary drive mechanism 8 described above about the motor 36, but also the movement mechanism 10, the slide mechanism 32, and the indexing mechanism 52 respectively include motors 110, 132, and 152 as drive sources. The control unit 50 controls operations of these mechanisms through control of the motors 36, 110, 132, and 152.

Next, a winding method executed by the winding apparatus 2 described above will be explained, taking as an example the case where the winding target is the rotor 4 of an inner-rotor type motor.

In this winding method, winding one turn of the wire W around the magnetic pole 4a is carried out substantially as follows. Namely, when winding both end portions of the magnetic pole 4a in the direction indicated by arrow Z (see Fig. 2, i.e., the direction of the central axis C of the rotor 4), the nozzle 14 is rotated by approximately 180 degrees such that the nozzle 14 draws a conical trajectory, by rotating the rotation shaft 6 (substantially the outer cylinder 6b) in one direction. When winding respective straight portions extending in the direction indicated by arrow Z of the magnetic pole 4a, after completion of the rotation of the nozzle 14, the rotation shaft 6 together with the nozzle 14 is linearly moved in the direction indicated by arrow Z. A more specific description is provided below.

It should be noted that the nozzle 14 is rotated together with the rotation shaft 6 by the same angle and in the same direction as the rotation of the rotation shaft 6. Therefore, by controlling the motor 36 to rotate the outer cylinder 6b of the rotation shaft 6 by a desired angle, the nozzle 14 can be rotated by the same angle.

Fig. 5A and Fig. 5B are diagrams for explaining winding operations performed by the winding apparatus 2. Fig. 5A illustrates movement of the nozzle 14 with respect to a cross-section of the magnetic pole 4a that is parallel to the central axis C of the rotor 4, and Fig. 5B is a perspective view illustrating rotational movement of the nozzle 14 when winding an end portion of the magnetic pole 4a.

Here, among an outer circumferential surface of the magnetic pole 4a, a pair of surfaces extending in parallel to the direction indicated by arrow Z are referred to as a first portion 4a-1 and a third portion 4a-3, respectively, and two surfaces located between respective distal ends of the first portion 4a-1 and the third portion 4a-3 are referred to as a second portion 4a-2 and a fourth portion 4a-4, respectively. The second portion 4a-2 and the fourth portion 4a-4 are located at respective end portions of the magnetic pole 4a in the direction indicated by arrow Z. In the example of Fig. 5A, the second portion 4a-2 and the fourth portion 4a-4 are flat surfaces; however, they may be curved surfaces, or they may be formed of a plurality of flat surfaces and/or curved surfaces. The boundaries between the portions need not be edges, and may instead be chamfered or rounded.

As shown in Fig. 5A, the winding apparatus 2 performs one turn of winding around the magnetic pole 4a in the following manner.

First, the entire rotation shaft 6 (rotation shaft unit 15) is linearly moved together with the nozzle 14 along the direction indicated by arrow Z from the bottom to the top in the figure (first direction). By this movement, the wire W can be wound onto the first portion 4a-1. At this time, as shown in Fig. 1, the nozzle 14 is inserted between adjacent magnetic poles 4a through the slot opening 12.

Next, after the nozzle 14 reaches in the vicinity of a second-portion-side distal end of the first portion 4a-1, the outer cylinder 6b of the rotation shaft 6 is rotated by the rotational drive mechanism 8, thereby rotating the nozzle 14 by approximately 180 degrees in a clockwise direction (second direction) as seen from the rotation shaft 6 side such that the nozzle 14 draws a conical trajectory as shown in Fig. 5B. By this rotation, the wire W can be wound onto the second portion 4a-2. During this rotation, the nozzle 14 once advances substantially along the central axis C of the rotor 4 to exit outside the slot opening 12, then passes over the second portion 4a-2, and thereafter is inserted into the adjacent slot opening 12.

In terms of Fig. 1, by rotating the nozzle support unit 16 by 180 degrees about the rotation shaft 6, the nozzle support unit 16 and the nozzle 14 are moved from the state shown in Fig. 1 to a position that is line-symmetrical to the initial position with respect to the axis of the rotation shaft 6, and the nozzle 14 is inserted into the slot opening 12 located one position to the left as compared with the state of Fig. 1. This movement becomes possible by arranging the rotation shaft 6 substantially on the central axis of the magnetic pole 4a as the winding target, as in Fig. 1, and by the nozzle 14 having the inclination angle *θ*1 relative to the axis of the rotation shaft 6.

Next, after this rotation, the entire rotation shaft 6 together with the nozzle 14 is linearly moved in the direction indicated by arrow Z from top to bottom in the figure (i.e., in a direction opposite to the first direction). By this movement, the wire W can be wound onto the third portion 4a-3.

Subsequently, after the nozzle 14 reaches in the vicinity of a fourth-portion-side distal end of the third portion 4a-3, the outer cylinder 6b of the rotation shaft 6 is rotated by the rotational drive mechanism 8, thereby rotating the nozzle 14 by approximately 180 degrees in a clockwise direction (second direction) as seen from the rotation shaft 6 side such that the nozzle 14 draws a conical trajectory. By this rotation, the wire W can be wound onto the fourth portion 4a-4. The trajectory of this rotation corresponds to the lower half of the trajectory indicated by phantom lines in Fig. 5B, that is, a trajectory line-symmetrical to the trajectory used for winding onto the second portion 4a-2, but displaced toward the fourth portion 4a-4 side.

With the above operations, one turn of the winding is completed. After completion of the rotation of the nozzle 14 for winding onto the fourth portion 4a-4, the entire rotation shaft 6 together with the nozzle 14 is linearly moved from bottom to top in the figure along the direction indicated by arrow Z. By this movement, the wire W for the next turn can be wound onto the first portion 4a-1.

In the above winding operation, the vertical movement of the rotation shaft 6 in the direction indicated by arrow Z is performed through control of the movement mechanism 10 by the control unit 50, and the approximately 180° rotation in which the nozzle 14 draws the conical trajectory (strictly, a truncated conical trajectory because no vertex exists) at both end portions of the magnetic pole 4a is performed through control of the rotational drive mechanism 8 by the control unit 50. By slidingly displacing the nozzle 14 in its axial direction by a predetermined amount (corresponding to the diameter of the wire W) while the nozzle 14 makes one turn around the magnetic pole 4a, alignment winding can be performed.

After the alignment winding is performed over the entire length of the magnetic pole 4a, the wire can be further wound on the wound layer, thereby performing alignment multi-layer winding. The predetermined sliding displacement of the nozzle 14 is performed through control of the slide mechanism 32 by the control unit 50. If required parameters such as the rotation amount of the outer cylinder 6b, the linear movement amount of the rotation shaft 6, and the sliding displacement amount of the nozzle 14 are stored in advance in the ROM, the control unit 50 can execute a required program while referring to these data, thereby controlling respective components necessary for the winding operation described above.

When the alignment winding on one magnetic pole 4a is completed, in order to perform winding on an adjacent magnetic pole 4a, the control unit 50 controls the indexing mechanism 52 (see Fig. 4) to rotate the rotor 4 by the angle *θ*2 shown in Fig. 1. Thereafter, winding on the adjacent magnetic pole 4a can be successively performed in accordance with the same procedure as described above with reference to Fig. 5A and Fig. 5B. When configuring the winding on one magnetic pole 4a and the winding on the adjacent magnetic pole 4a as separate coils, a wire-cutting process and a process of fixing an end portion of the wire W at a predetermined position may be performed before or after rotation of the rotor 4.

Although the above description illustrates an example in which winding is started from the first portion 4a-1, it is of course possible to start winding from any portion in one turn. Further, the winding can be carried out in a counterclockwise direction in the same manner as in the clockwise direction shown in Fig. 5A.

Also, it is not necessary that the switching position or switching timing between the linear movement and the rotational movement of the nozzle 14 exactly coincide with a position or timing at which the winding transitions from one portion (surface) to another, such as from the first portion 4a-1 to the second portion 4a-2. For example, if the rotational movement of the nozzle 14 is started slightly before the nozzle 14 reaches the end of the first portion 4a-1, winding by the rotational movement of the nozzle 14 will be performed not only on the second portion 4a-2, but also on respective regions near the ends of the first portion 4a-1 and the third portion 4a-3.

Next, effects of the winding apparatus 2 and the winding method described above will be explained with reference to a comparative example. In the comparative example, when winding the wire onto the second portion 4a-2 and the fourth portion 4a-4, which are end portions of the magnetic pole 4a in the central-axis direction of the rotor 4, the nozzle 14 is not moved. Instead, winding is performed by rotating the rotor 4 to change the relative position between the nozzle 14 and the rotor 4.

Fig. 6A and Fig. 6B are diagrams for explaining the winding operation in this comparative example. Fig. 6A corresponds to Fig. 5A, and Fig. 6B is a plan view of main portions of the rotor and the nozzle for explaining that a trajectory of the nozzle is arc-shaped. Fig. 7 is a plan view for explaining a difference between the trajectory of the nozzle in the winding operation by the winding machine 2 described above and the trajectory of the nozzle in the winding operation in the comparative example.

In the above comparative example, as shown in Fig. 6A, after the rotor 4 is rotated in a direction indicated by arrow L by an angle *θ*2 (see Fig. 1) corresponding to an angle between adjacent magnetic poles 4a, the nozzle 70 is linearly moved in one direction (in a direction indicated by arrow Z) along the central axis of the rotor 4. After the nozzle 70 reaches the opposite side of the magnetic pole 4a, the rotor 4 is rotated in an opposite direction (in a direction indicated by arrow R) by the angle *θ*2, and thereafter the nozzle 70 is linearly moved in a direction opposite to the one direction along the central axis of the rotor 4. Thorough the movements above, the nozzle 70 is caused to travel once around the magnetic pole 4a to perform one turn of winding.

In Fig. 6A, transitions in a relative positional relationship between the magnetic pole 4a and the nozzle 70 accompanying the progress of the winding are illustrated. That is, Fig. 6A illustrates, for example, that when the rotor 4 is rotated in the direction indicated by arrow L during winding onto the second portion 4a-2, the relative position of the nozzle 70 shifts to the right. Fig. 6A similarly illustrates the transition during the rotation in the R direction during winding onto the fourth portion 4a-4.

In this method, for example, when winding onto the second portion 4a-2, as shown in Fig. 6B and in the left side of Fig. 7, a tip of the nozzle 70 traces an arc-shaped trajectory t1 relative to the magnetic pole 4a, centered on the central axis C of the rotor 4. This is because the magnetic pole 4a moves in a rotational manner around the central axis C of the rotor 4. Accordingly, the position of the wire W in the axial direction of the magnetic pole 4a is unstable, and the alignment accuracy of the wire W deteriorates. To solve this problem, it may be considered to cancel the positional displacement caused by the arc-shaped trajectory by shifting the nozzle 14 or the rotor 4 in the axial direction of the magnetic pole 4a during rotation of the rotor 4, thereby substantially converting the arc trajectory of the nozzle 14 into a linear trajectory. However, this countermeasure involves complicated corrective operations, and thus the winding speed decreases.

In contrast, in the winding apparatus 2 and the winding method according to the present embodiment, winding onto the second portion 4a-2 and the fourth portion 4a-4 is performed by rotating the nozzle 14 by approximately 180 degrees such that the nozzle 14 draws a conical trajectory, and therefore it is not necessary to rotate the rotor 4. Accordingly, as shown on the right side of Fig. 7, the trajectory t2 of the nozzle 14 relative to the magnetic pole 4a is linear, so that the position of the wire W in the axial direction of the magnetic pole 4a is stable, enabling highly accurate alignment of the wound wire. Furthermore, since no complicated correction operation for converting an arc-shaped trajectory of the nozzle into a linear trajectory is required, the problem of reduction in winding speed does not arise.

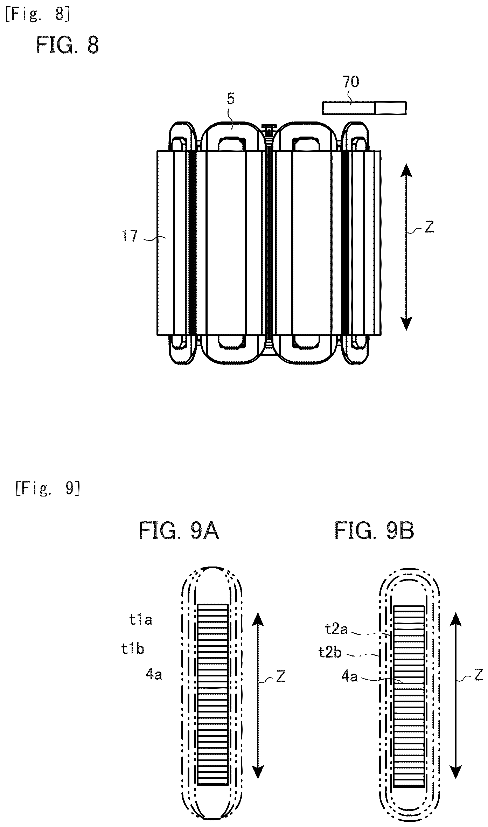

Fig. 8 illustrates a positional relationship between the rotor and the nozzle 70 in the winding apparatus according to the comparative example. Fig. 8 is a side view corresponding to Fig. 2; however, illustration of a support unit and a driving unit of the nozzle 70 is omitted. Fig. 9A and Fig. 9B illustrate differences in trajectories of the nozzle depending on its angle relative to the rotor. Fig. 9A shows trajectories in the comparative example, and Fig. 9B shows trajectories in the winding apparatus 2.

In the winding apparatus according to the comparative example, since the nozzle 70 only needs to be moved in the vertical direction (the direction indicated by arrow Z in Fig. 8), it is sufficient that the nozzle 70 is aligned with the slot opening 12 when winding is performed. The orientation of the nozzle 70 may be maintained in a direction along the radial direction of the rotor 4 and perpendicular to the central axis C of the rotor 4.

Here, even in the case of the comparative example, with respect to winding onto the first portion 4a-1 and the third portion 4a-3 of the magnetic pole 4a, when winding near the base of the magnetic pole 4a, the tip of the nozzle 70 comes closer to the outer circumferential surface of the magnetic pole 4a than when winding near the distal end of the magnetic pole 4a, which is the same as in the winding apparatus 2 (see Fig. 1). However, with respect to winding onto the second portion 4a-2 and the fourth portion 4a-4, the distance between the tip of the nozzle 70 and the outer circumferential surface of the magnetic pole 4a remains constant regardless of whether winding is performed near the base of the magnetic pole 4a or near the distal end of the magnetic pole 4a (unless separate adjustment is made).

Accordingly, as shown in Fig. 9A, the trajectory t1a of the tip of the nozzle 70 when winding near the base of the magnetic pole 4a and the trajectory t1b of the tip of the nozzle 70 when winding near the distal end of the magnetic pole 4a have the same length in the axial direction of the rotor 4 (vertical direction in the figure), but differ in length in the circumferential direction thereof (horizontal direction in the figure). Because of this, the trajectory t1a is elongated in the vertical direction relative to the cross-sectional shape of the magnetic pole 4a, making the wire prone to slack and reducing the tightness with which the wire is wound around the magnetic pole 4a. Consequently, the wire alignment accuracy deteriorates.

In contrast, in the winding apparatus 2 and winding method according to the present embodiment, the nozzle 14 has the inclination angle *θ*1 relative to the rotation shaft 6, and the winding onto the second portion 4a-2 and the fourth portion 4a-4 is performed by rotating the nozzle 14 by approximately 180 degrees about the rotation shaft 6. Accordingly, as is also apparent from Fig. 2, the distance between the tip of the nozzle 14 and the outer circumferential surface of the magnetic pole 4a during winding on the second portion 4a-2 and the fourth portion 4a-4 becomes smaller as the winding position goes toward the base side of the magnetic pole 4a, i.e., as the nozzle 14 is inserted deeper in the radial direction of the rotor 4, in the same manner as in winding on the first portion 4a-1 and the third portion 4a-3.

Accordingly, as shown in Fig. 9B, the trajectory t2a of the tip of the nozzle 14 when winding near the base of the magnetic pole 4a is shorter in the axial direction of the rotor 4 than the trajectory t2b when winding near the tip of the magnetic pole 4a. As a result, the respective trajectories are close to similar shapes and the difference from the outer profile of the magnetic pole 4a can be reduced, making slack of the wire W less likely to occur. Therefore, the problem of loosened winding around the magnetic pole 4a and deterioration of alignment accuracy does not arise.

In the above-mentioned conventional winding method, when the winding on one magnetic pole 4a is completed and the winding transitions to the adjacent magnetic pole 4a, the nozzle 70 is located away from the axial end face of the rotor 4 (i.e., the end face of the magnetic pole). Therefore, it is necessary to tilt the nozzle 70 only at this timing, or to user another guide or the like so as to forcibly bring the wire close to the end face of the rotor 4.

That is, if the tip of the nozzle 70 is brought excessively close to the end face of the rotor 4, the base of the nozzle 70 may contact the end face or the insulator 5, which may cause damage. For this reason, the tip of the nozzle 70 could not be placed so close to the end face of the rotor 4.

In contrast, in the winding apparatus 2 and the winding method according to the present embodiment, even without bringing a base portion of the nozzle 14 close to the axial end face of the rotor 4, the tip of the nozzle 14 can be brought close to the end face or to the insulator 5 by sliding the nozzle 14 toward the inner side in the radial direction of the magnetic pole 4a, because the nozzle 14 has the inclination angle *θ*1. Therefore, the wire W can be moved to the next magnetic pole 4a without requiring any special measures.

Next, the feeding of the wire W from the nozzle will be described.

Fig. 10A to Fig. 10D illustrate examples of the state of feeding of the wire at the tip of the nozzle. Fig. 11A illustrates an example of the feeding state in the winding apparatus 2, and Fig. 11B illustrates an example of the feeding state in the comparative example.

In the winding apparatus 2 for performing winding on the rotor 4 as described above, it is conceivable to form the nozzle 14 with an elongated elliptical cross-section so that it can easily pass through the narrow slot opening 12. The reason for adopting an elongated shape is to form, on the major-axis side of a wire feed port 14a, a curved guide surface having a larger radius of curvature than that on the minor-axis side, and to feed the wire W through this surface so as to prevent the wire W from being damaged due to friction with the wire feed port 14a. When the distance from the wire feed port 14a to the outer circumferential surface of the nozzle 14 is short, it is difficult to form a curved guide surface having a large radius of curvature.

Fig. 10A and Fig. 10B illustrate a state in which the wire W is fed through a curved guide surface 14a-1 having a small radius of curvature on the minor-axis side, whereas Fig. 10C and Fig. 10D illustrate a state in which the wire W is fed through a curved guide surface 14a-2 having a large radius of curvature on the major-axis side.

In the above-mentioned comparative example, when winding is performed on the second portion 4a-2 and the fourth portion 4a-4 of the magnetic pole 4a, as shown in Fig. 11B, the nozzle 70 remains oriented in the same direction as during winding onto the first portion 4a-1 and the third portion 4a-3, i.e., with the minor axis oriented along the circumferential direction of the rotor 4 and the major axis oriented along the central axis C of the rotor 4. In this state, the nozzle 70 moves relative to the magnetic pole 4a due to the rotation of the rotor 4. Accordingly, the wire W is fed through the curved guide surface 14a-1 on the minor-axis side, which has a small radius of curvature, and there is a possibility that the coating or the like of the wire W may be damaged.

In contrast, in the winding apparatus 2 and the winding method according to the present embodiment, as shown in Fig. 11A, when winding is performed on the second portion 4a-2 and the fourth portion 4a-4 of the magnetic pole 4a, the nozzle 14 rotates such that the nozzle 14 traces a conical trajectory. Accordingly, the wire W is always fed through the curved guide surface 14a-2 which has a large radius of curvature, and damage to the coating or the like of the wire W can be avoided. In this case, it is not necessary to rotate the nozzle 14 relative to the nozzle support unit 16.

For this reason, complicated control for continuously changing the orientation of the nozzle while making one turn around the magnetic pole 4a, as in the configuration described in PTL 2, is not required, nor is a configuration in which the tip portion of the nozzle is made rotatable, as in the configuration described in PTL 3.

The same applies even when the cross-section of the nozzle 14 is not a precise ellipse, but has some shape having a minor axis (a direction in which the distance from the center to the end is short) and a major axis (a direction in which the distance from the center to the end is long), such as a rounded rectangle.

As described above, according to the winding method of the present embodiment, all of the various problems in the comparative example can be eliminated without requiring the complicated control described in PTL 2 or PTL 3. The configuration can also be made relatively simple, and compared with configurations accompanied by complicated control, the simple configuration contributes to higher winding speed and lower cost.

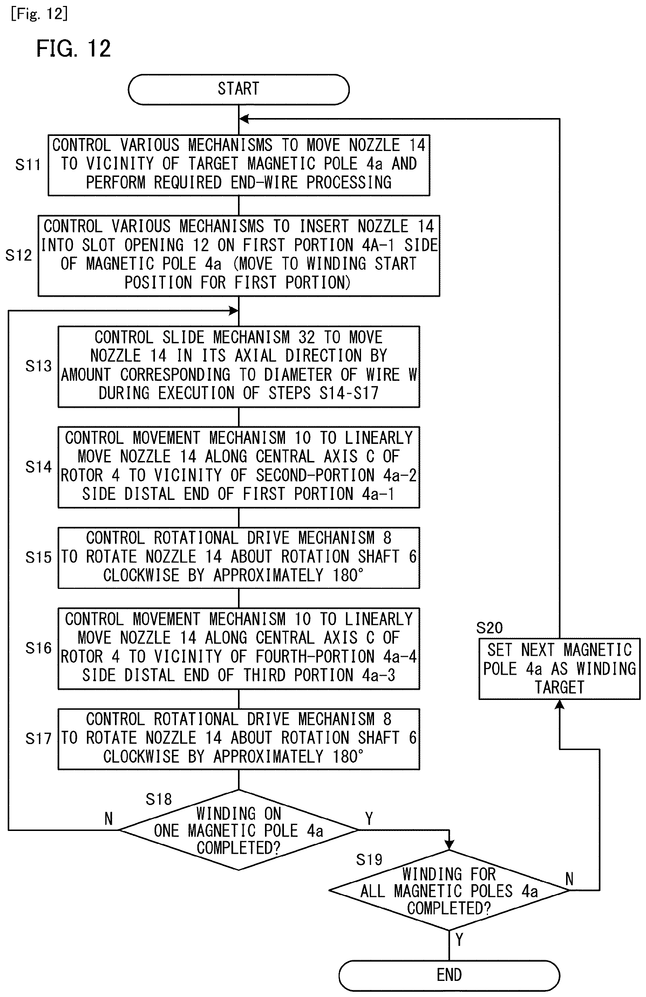

Here, Fig. 12 illustrates an example of processing performed by the control unit 50 to execute a winding method according to the present embodiment. This processing is for performing the winding operations described with reference to Fig. 5A and Fig. 5B. The processing may be implemented by software, hardware, or a combination thereof.

When execution of winding onto the rotor 4 is instructed, the control unit 50 starts the processing of Fig. 12. First, the control unit 50 controls various mechanisms, including those shown in Fig. 4, to move the nozzle 14 to the vicinity of the magnetic pole 4a that is the initial winding target, and performs required end-wire processing (S11). Next, the control unit 50 controls the various mechanisms to insert the nozzle 14 into the slot opening 12 on the first-portion 4a-1 side of the magnetic pole 4a, that is, to move the nozzle 14 to the winding start position for the first portion 4a-1 (S12).

Thereafter, the control unit 50 controls the slide mechanism 32 to move the nozzle 14 in its axial direction by an amount corresponding to the diameter of the wire W during execution of steps S14 to S17 (S13). The actual movement is performed in parallel with the processing in steps S14 to S17.

In steps S14 to S17, the control unit 50 controls the movement mechanism 10 and the rotational drive mechanism 8 so that the nozzle 14 makes one revolution around the magnetic pole 4a by combining the linear movement and the rotational movement as described with reference to Fig. 5A and Fig. 5B, thereby performing one turn of winding.

The control unit 50 repeats steps S13 to S17 until the winding on one magnetic pole 4a is completed, thereby performing the required number of turns of winding (No in S18). When the winding on one magnetic pole 4a is completed (Yes in S18), the process proceeds to step S19. As long as the winding for all the magnetic poles 4a has not yet been completed (No in S19), the next magnetic pole 4a is set as the winding target, and the processing from step S11 is repeated. When the winding for all the magnetic poles 4a is completed (Yes in S19), the processing shown in Fig. 12 is terminated.

By executing the above processing, the control unit 50 can control the winding apparatus 2 to perform winding onto the rotor 4.

Although a preferred embodiment of the present invention has been described above, the present invention is not limited to such specific embodiment, and various modifications and alterations may be made.

For example, in the above embodiment, winding onto the rotor 4 of an inner-rotor type motor has been illustrated as an example, but the invention can be implemented similarly in winding onto a stator of an outer-rotor type motor. Furthermore, the invention can likewise be applied to winding onto an armature in which a plurality of magnetic poles are radially arranged and face outward in a radial direction of the armature.

Furthermore, the constituent elements of the embodiment of the present invention described above may be implemented individually, and, unless mutually inconsistent, the configurations described in the foregoing explanation may be combined with each other in any manner. The effects described in the embodiment of the present invention merely illustrate the most preferable effects resulting from the present invention, and the effects of the present invention are not limited to those described in the embodiment.

### [Reference Signs List]

2: winding apparatus, 4: rotor, 4a: magnetic pole, 4a-1: first portion, 4a-2: second portion, 4a-3: third portion, 4a-4: fourth portion, 5: insulator, 6: rotation shaft, 6a: inner shaft, 6b: outer cylinder, 8: rotational drive mechanism, 10: movement mechanism, 12: slot opening, 14, 70: nozzle, 14a: wire feed port, 14a-1: curved guide surface having a small radius of curvature, 14a-2: curved guide surface having a large radius of curvature, 16: nozzle support unit, 18: base member, 19: conveyance path, 20: nozzle support body, 22: arm, 24: annular groove, 26: cam follower, 28: rotary member, 29: bearing, 30: rail member, 32: slide mechanism, 34: first pulley, 35: frame, 36, 110, 132, 152: motor, 38: second pulley, 40: timing belt (belt), 42: link, 44: coupling, 52: indexing mechanism, C: central axis, W: wire, *θ*1: inclination angle, *θ*2: angle formed between adjacent magnetic poles 4a

## Claims

1. A winding method for an armature in which a plurality of magnetic poles are radially arranged and face outward in a radial direction of the armature,
an outer circumferential surface of an axis of each magnetic pole including a pair of a first portion and a third portion extending in parallel with a central axis direction of the armature, and a second portion and a fourth portion respectively located between distal ends of the first portion and the third portion,
the method comprising:
preparing a nozzle configured to feed a wire, the nozzle being supported relative to a rotation shaft perpendicular to the central axis of the armature and extending along the radial direction such that the nozzle has an inclination angle, relative to the rotation shaft, that is a first angle equal to half of an angle formed between adjacent magnetic poles among the plurality of magnetic poles; and
while feeding the wire from the nozzle, performing one turn of winding around the magnetic pole by:
linearly moving the rotation shaft together with the nozzle in a first direction parallel to the central axis;
after the nozzle reaches in the vicinity of a second-portion-side distal end of the first portion, rotating the nozzle about the rotation shaft in a second direction by approximately 180 degrees;
thereafter linearly moving the rotation shaft together with the nozzle in a direction opposite to the first direction; and
after the nozzle reaches in the vicinity of a fourth-portion-side distal end of the third portion, rotating the nozzle about the rotation shaft in the second direction by approximately 180 degrees.

2. The winding method according to claim 1,
wherein the one turn of winding around the magnetic pole comprises:
winding the wire onto the first portion of the magnetic pole by linearly moving the rotation shaft together with the nozzle in the first direction;
after the nozzle reaches in the vicinity of the second-portion-side distal end of the first portion, winding the wire onto the second portion of the magnetic pole by rotating the nozzle about the rotation shaft in the second direction by approximately 180 degrees;
thereafter winding the wire onto the third portion of the magnetic pole by linearly moving the rotation shaft together with the nozzle in the direction opposite to the first direction; and
after the nozzle reaches in the vicinity of the fourth-portion-side distal end of the third portion, winding the wire onto the fourth portion of the magnetic pole by rotating the nozzle about the rotation shaft in the second direction by approximately 180 degrees.

3. The winding method according to claim 1,
wherein the nozzle is supported by a nozzle support unit that is supported on the rotation shaft, such that the nozzle is slidable along a conveyance path having an inclination angle of the first angle relative to the rotation shaft, and
wherein the method comprises:
while sliding the nozzle by a predetermined distance along the conveyance path during the one turn of winding around the magnetic pole, performing a plurality of turns of winding around the magnetic pole, thereby performing aligned winding of the wire on the magnetic pole.

4. The winding method according to any one of claims 1 to 3,
wherein, when rotating the nozzle about the rotation shaft in the second direction, the nozzle is rotated in the same direction as a rotation of the rotation shaft and by the same angle as the rotation of the rotation shaft.

5. A winding apparatus configured to perform winding on an armature in which a plurality of magnetic poles are radially arranged and face outward in a radial direction of the armature, the winding apparatus comprising:
a rotation shaft configured to be disposed perpendicular to a central axis of the armature as a winding target and along the radial direction;
a first driving unit configured to rotate the rotation shaft about its axis;
a second driving unit configured to move the rotation shaft in a direction parallel to the central axis of the armature;
a nozzle configured to feed a wire;
a nozzle support unit configured to support the nozzle such that the nozzle has an inclination angle, relative to the rotation shaft, that is a first angle equal to half of an angle formed between adjacent magnetic poles among the plurality of magnetic poles of the armature; and
a controller configured to control the first driving unit and the second driving unit such that, with respect to the armature in which an outer circumferential surface of an axis of each magnetic pole includes a pair of a first portion and a third portion extending in parallel with a central axis direction of the armature, and a second portion and a fourth portion respectively located between distal ends of the first portion and the third portion, while feeding the wire from the nozzle,
the rotation shaft is linearly moved together with the nozzle supported by the nozzle support unit in a first direction parallel to the central axis;
after the nozzle reaches in the vicinity of a second-portion-side distal end of the first portion, the nozzle is rotated about the rotation shaft in a second direction by approximately 180 degrees;
thereafter the rotation shaft is linearly moved together with the nozzle in a direction opposite to the first direction; and
after the nozzle reaches in the vicinity of a fourth-portion-side distal end of the third portion, the nozzle is rotated about the rotation shaft in the second direction by approximately 180 degrees,
thereby performing one turn of winding around the magnetic pole.

6. The winding apparatus according to claim 5,
wherein the controller is configured to control the first driving unit and the second driving unit such that
the wire is wound onto the first portion of the magnetic pole by linearly moving the rotation shaft together with the nozzle in the first direction;
after the nozzle reaches in the vicinity of the second-portion-side distal end of the first portion, the wire is wound onto the second portion of the magnetic pole by rotating the nozzle about the rotation shaft in the second direction by approximately 180 degrees;
thereafter the wire is wound onto the third portion of the magnetic pole by linearly moving the rotation shaft together with the nozzle in the direction opposite to the first direction; and
after the nozzle reaches in the vicinity of the fourth-portion-side distal end of the third portion, the wire is wound onto the fourth portion of the magnetic pole by rotating the nozzle about the rotation shaft in the second direction by approximately 180 degrees,
thereby performing the one turn of winding around the magnetic pole.

7. The winding apparatus according to claim 5,
wherein the nozzle support unit comprises a conveyance path configured to support the nozzle such that the nozzle is slidable with an inclination angle of the first angle relative to the rotation shaft,
the apparatus further comprising a third driving unit configured to slide the nozzle supported within the conveyance path,
wherein the controller is configured to control the third driving unit such that, during the one turn of winding around the magnetic pole, the nozzle is slid by a predetermined distance along the conveyance path.

8. The winding apparatus according to claim 5,
wherein the first driving unit comprises: a first pulley operatively coupled to the rotation shaft; a motor; a second pulley operatively coupled to the motor; a belt looped around between the first pulley and the second pulley; a link that supports the first pulley rotatably relative to the second pulley; and a coupling provided between the second pulley and a rotation shaft of the motor, the coupling being configured to transmit rotation of the motor to the second pulley while allowing a positional displacement of the second pulley in a direction orthogonal to a movement direction of the rotation shaft by the second driving unit.

9. The winding apparatus according to claim 8,
wherein the first pulley and the second pulley have the same number of teeth, the belt is a timing belt, and the coupling is an Oldham coupling.

10. The winding apparatus according to claim 7,
wherein the rotation shaft comprises: an outer cylinder configured to be rotated by the first driving unit; and an inner shaft located inside the outer cylinder and configured to be rotated together with the outer cylinder,
wherein the nozzle support unit comprises: a base member fixed to the outer cylinder and having the conveyance path; and a nozzle support body provided to be slidable along the conveyance path and configured to support the nozzle,
wherein the nozzle support body has an arm extending in a direction orthogonal to a direction of the slide movement, the arm being engaged, via a cam follower, with an annular groove formed at a distal end portion of the inner shaft on the armature side, such that movement of the inner shaft in its axial direction causes the nozzle support body to slide, and
wherein the third driving unit is configured to slide the nozzle via the nozzle support body by moving the inner shaft in its axial direction.

11. The winding apparatus according to claim 10, comprising
a rail member extending along the central axis direction of the armature as the winding target,
wherein a rear end portion of the inner shaft on a side opposite to the armature is supported by the rail member, and
wherein the third driving unit is configured to move the inner shaft in its axial direction by sliding the rail member in the axial direction of the inner shaft.

12. The winding apparatus according to claim 5,
wherein a cross section of the nozzle, taken perpendicular to a longitudinal direction of the nozzle, has a shape having a major axis and a minor axis with a wire feed port located substantially at a center thereof, and
wherein a curved guide surface is formed on a surface of a longitudinal end portion of the nozzle, the curved guide surface having a larger radius of curvature on a major-axis side than on a minor-axis side.

13. The winding apparatus according to any one of claims 5 to 12,
wherein, during the one turn of winding around the magnetic pole, the nozzle is rotated together with the rotation shaft in the same rotational direction and by the same rotational angle as a rotation of the rotation shaft.
